# EUROPÄISCHE PATENTSCHRIFT

(11) **EP 0 593 858 B1**
(45) Veröffentlichungstag und Bekanntmachung des Hinweises auf die Patenterteilung: **20.12.1995**
(21) Anmeldenummer: 93111568.7
(22) Anmeldetag: 20.07.1993
(51) Int. Cl.: H02G 3/26, F16L 3/24, E04F 13/08

(54) **Mehrteilige Konsole**
Multiple part bracket
Support en plusieurs pièces

(30) Priorität: 21.10.1992 DE 9214200 U
(43) Veröffentlichungstag der Anmeldung: 27.04.1994
(73) Patentinhaber: REHAU AG + Co, 95111 Rehau (DE)
(72) Erfinder: Zielke, Peter, D-8673 Rehau (DE); Lutz, Peter, D-8673 Rehau (DE); Ehringer, Sigurd, D-8673 Rehau (DE); Hirschmann, Robert, D-8673 Rehau (DE)

(56) Entgegenhaltungen:
- CH-A- 532 726
- DE-A- 3 340 650
- DE-U- 7 306 928

## Beschreibung

Die Erfindung betrifft eine mehrteilige Konsole zur Festlegung von Installationskanälen auf Unterlagen wie Gebäudewänden und dergleichen, bestehend aus einem sich überlappenden und im Bereich der Überlappung aufeinander verschieblich und feststellbar gestalteten Wandwinkel und kanalseitigen Winkel, wobei in den Abwinkelungen Langlöcher zur Höhenanpassung der Konsole an der Gebäudewand einerseits und zur Lagefixierung des Installationskanals an der Konsole andererseits eingebracht sind.

Aus der PCT-Anmeldung WO 86/06887 ist ein Installationskanalsystem bekannt, bei dem eine Konsole zur Wandbefestigung des Kanals verwendet wird, in welcher Langlöcher zur vertikalen Bewegung der Konsole an der Wandseite angeordnet sind. Über diese Langlöcher kann die Konsole durch Verschiebung in der Z-Achse des Koordinationssystems und damit auch der auf der Konsole aufzurastende Installationskanal in die richtige Ebene gebracht werden.

Aus der Europäischen Patentschrift 02 77 344 B1 sind Anbaukanäle für Leitungen bekannt, die ebenfalls einen wandseitigen Abstandhalter zur Festlegung der Kanäle an beispielsweise Gebäudewänden benötigen. Der dort beschriebene Abstandhalter ist zweiteilig ausgebildet und besitzt einen Wandbefestigungsbereich sowie einen zweiten Befestigungsbereich zum Verbinden der Unterseite des Kabelkanals. Diese beiden Befestigungsbereiche stellen zwei voneinander unabhängige Einzelteile des Befestigungssystems dar und sind axial verschieblich aufeinander angeordnet. Im Bereich dieser Verschieblichkeit sind sich überlappende Langlöcher in die Grundkörper beider Befestigungsbereiche eingebracht, durch die beispielsweise eine Schraube als Feststellmittel greift.

Die beiden axial gegeneinander im Bereich der sich überlappenden Langlöcher aufeinander verschieblichen Befestigungsbereiche gestatten eine Tiefeneinstellung des Kabelkanals von der Wand in Richtung der Y-Achse des Koordinationssystems.

Der kanalseitige Befestigungsbereich des bekannten Standes der Technik kann in seinem Flanschbereich zum Kanal hin ebenfalls Langlöcher aufweisen, die mit Langlöchern im Kanalboden kommunizieren. Auf diese Weise kann der Kabelkanal durch eine horizontale Bewegung in der X-Achse des Koordinatensystems zusätzlich ausgerichtet werden.

Der bekannte Stand der Technik gestattet also durch Verschiebungen von Konsolenteilen und des Kanals selbst Anpassungsbewegungen in der X-, Y-und Z-Achse des Koordinatensystems. Hier setzt die Erfindung ein, die es sich zur Aufgabe gestellt hat, zusätzlich zu diesen bekannten Bewegungsmöglichkeiten eine vierte Bewegungsart zur Ausgleichung von Wandunebenheiten bei der Festlegung der wandseitigen Konsolenbereiche auf der Unterlage anzugeben. Erfindungsgemäß wird dies durch ein gestrecktes Mittelteil mit Langlochführung für die Festlegung des Mittelteils an einem Teilbereich des kanalseitigen Winkels erreicht, wobei am Mittelteil außerhalb der Langlochführung über ein Verbindungselement der Wandwinkel mit seiner winkelförmigen Abkröpfung drehbeweglich gehaltert ist, in welcher im gegenüber der Drehachse gelegenen Randbereich eine gebogene, durchgehende Schlitzöffnung eingebracht ist, durch welche ein Feststellelement mit dem gestreckten Mittelteil verbindbar ist. Hierbei ist vorteilhaft, daß das Verbindelement ein Einsteckniet ist. Dagegen ist das Feststellelement zweckmäßigerweise eine Klemmschraube.

Die neuerungsgemäße Anordnung der Konsolenteilbereiche aufeinander gestattet eine vierte Bewegungsmöglichkeit der Konsolenbefestigung, nämlich eine Drehung um die X-Achse des Koordinatensystems, im Schwenkbereich der gebogenen, durchgehenden Schlitzöffnung.

Die Schwenkbewegung der Konsolenteile um die X-Achse wird durch das Verbindungselement, das ein Einsteckniet sein kann, ermöglicht. Dieser Einsteckniet bildet die Drehachse bei der Schwenkbewegung.

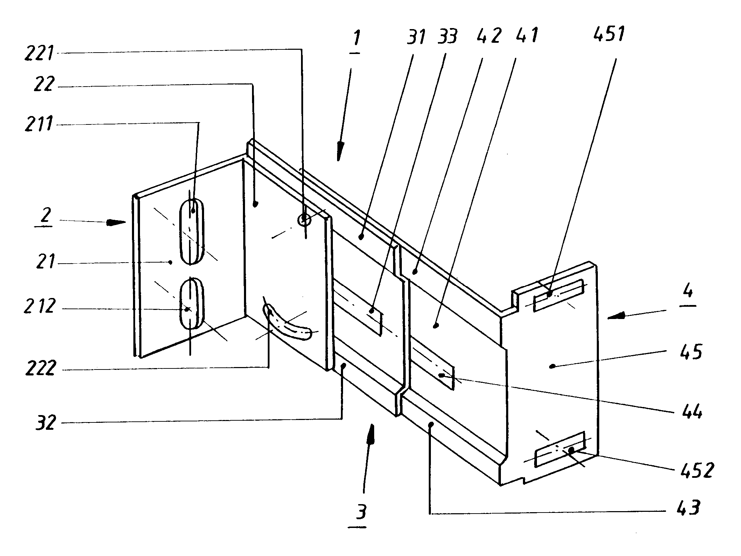

In der Zeichnung ist ein Ausführungsbeispiel der neuerungsgemäßen Konsole 1 schematisch dargestellt. Die Konsole 1 ist in der Darstellung dreiteilig gezeigt mit einem rückseitigen Wandwinkel 2, einem Mittelteil 3 und einem kanalseitigen Winkel 4. Der Kanal selbst ist in der Zeichnung nicht dargestellt.

Der Wandwinkel 2 besitzt an seiner wandseitigen Fläche 21 zwei Langlöcher 211, 212, welche übereinanderliegend in der Z-Achse des Koordinatensystems ausgerichtet sind. Bei Verwendung entsprechender Wandschrauben ist damit eine Verschieblichkeit des Wandwinkels 2 in der Z-Achse und damit eine Höhenanpassung des installierten Kanals durch vertikale Bewegung möglich. In der zum Mittelteil 3 gewandten Winkelförmigen Abkröpfung 22 des Wandwinkels 2 ist am oberen Randbereich eine Öffnung 221 enthalten, durch welche beispielsweise der Einsteckniet als Verbindungselement 221 zum Mittelteil 3 durchgesteckt sein kann. Der Einsteckniet ist in der Zeichnung nicht dargestellt. Es kann hier beispielsweise auch eine Verbindungsmöglichkeit dadurch zwischen dem Wandwinkel 2 und dem Mittelteil 3 hergestellt werden, indem ein vom Mittelteil aufragendes Befestigungselement von hinten durch die Öffnung für das Verbindungselement 221 gesteckt und dort von außen so festgelegt wird, daß der Wandwinkel 2 auf dem Mittelteil 3 gedreht werden kann. Zur Herstellung dieser Verbindung sind alle nach dem Stand der Technik bekannten Verbindungsmaßnahmen einsetzbar.

Am gegenüberliegenden unteren Randbereich der winkelförmigen Abkröpfung 22 ist die gebogene, durchgehende Schlitzöffnung 222 eingebracht, in der beispielsweise eine am Mittelteil 3 angeordnete Klemmschraube geführt werden kann. Die dadurch gegebene Schwenkbewegungsmöglichkeit der Konsolenelemente um die X-Achse des Koordinatensystems ist begrenzt durch die Abmessung der gebogenen, durchgehenden Schlitzöffnung 222. Über die Feststellschraube - in der Zeichnung nicht dargestellt - kann der Wandwinkel 2 nach dem Ausgleichen der Wandunebenheiten um Verschwenken der Konsole durch die X-Achse klemmend in der gewünschten Position festgelegt werden.

Das Mittelteil 3 und der zugeordnete Teilbereich 41 des kanalseitigen Winkels 4 sind aufeinander verschieblich angeordnet. Zur Erleichterung der Verschiebemöglichkeiten und zur Halterung aufeinander können die Randbereiche 31, 32 des Mittelteils 3 und die Randbereiche 42, 43 des Teilbereichs 41 entsprechend abgekröpft sein, so daß die Randbereiche 31, 32 des Mittelteils 3 die Randbereiche 42, 43 des Teilbereichs 41 übergreifen. Im Mittelteil 3 ist eine axial verlaufende Langlochführung 33, ausgespart, welche mit einer ebenfalls axial ausgerichteten Langlochführung 44 des Teilbereichs 41 fluchtet. Mittelteil 3 und Teilbereich 41 können über eine in der Zeichnung nicht dargestellte Durchsteckschraube nach Ausrichtung des Installationskanals in der Y-Achse des Koordinatensystems (Tiefenverstellung) aufeinander festgelegt werden.

Die kanalseitige Abwinkelung 45 des kanalseitigen Winkels 4 besitzt in ihren oberen und unteren Randbereichen in Winkelrichtung axial verlaufende Langlöcher 451, 452, welche mit entsprechenden Langlöchern am Boden oder der Seitenwand des nicht dargestellten Installationskanals fluchten. Auf diese Weise kann der Kanal in der horizontalen Bewegung, d.h. in der X-Achse des Koordinatensystems entsprechend ausgerichtet werden.

Wenn auf die Tiefenverstellung des Installationskanals in Richtung Y-Achse des Koordinatensystems bei dem Installationsvorgang verzichtet werden kann, kann die winkelförmige Abkröpfung 22 des Wandwinkels 2 auch direkt an den Teilbereich 41 des kanalseitigen Winkels 4 angeschlossen werden. Die Vernietung über die Drehachse des Verbindungselementes 221 und die Verschraubung durch die gebogene, durchgehende Schlitzöffnung 222 erfolgt dann direkt an den zugeordneten Randbereichen des Teilbereichs 41.

## Patentansprüche

1. Mehrteilige Konsole (1) zur Festlegung von Installationskanälen auf Unterlagen wie Gebäudewänden und dergleichen, bestehend aus einem sich überlappenden und im Bereich der Überlappung aufeinander verschieblich und feststellbar gestalteten Wandwinkel (2) und kanalseitigen Winkel (4), wobei in den Abwinkelungen Langlöcher zur Höhenanpassung der Konsole an der Gebäudewand einerseits und zur Lagefixierung des Installationskanals an der Konsole andererseits eingebracht sind, gekennzeichnet durch ein gestrecktes Mittelteil (3) mit Langlochführung (33) für die Festlegung des Mittelteils (3) an einem Teilbereich (41) des kanalseitigen Winkels (4), wobei am Mittelteil (3) außerhalb der Langlochführung (33) über ein Verbindungselement (221) der Wandwinkel (2) mit seiner winkelförmigen Abkröpfung (22) drehbeweglich gehaltert ist, in welcher im gegenüber der Drehachse des Verbindungselementes (221) gelegenen Randbereich eine gebogene, durchgehende Schlitzöffnung (222) eingebracht ist, durch welche ein Feststellelement mit dem gestreckten Mittelteil (3) verbindbar ist.

2. Konsole nach Anspruch 1, dadurch gekennzeichnet, daß das Verbindungselement (221) ein Einsteckniet ist.

3. Konsole nach Anspruch 1, dadurch gekennzeichnet, daß das Feststellelement für die durchgehende Schlitzöffnung (222) eine Klemmschraube ist.

## Claims

1. Multi-part bracket (1) to fix cable trunking on to items such as building walls and suchlike, consisting of an angled piece for the wall (2) and angled piece for the cable (4) which overlap and in the overlapping area can slide over one another and be fixed in place, whereby there are slots in the angled sections used to adjust the height of the bracket on the building wall on the one hand and to fix the position of the cable on the bracket on the other, characterized by a middle section (3) with slot (33) to fix the middle section (3) to a part (41) on the angled piece for the cable (4), whereby on the middle section (3) beyond the slot (33) the angled piece for the wall (2) is fixed by its angled section (22) by means of a connection element (221) in such a way that it can be rotated, this angled section (22) containing a curved slot (222) in the section opposite the connecting element through which a fixing element can be inserted to connect the middle section (3).

2. Bracket as described in Claim 1, characterized in that the connecting element (221) is an insertable rivet.

3. Bracket as described in Claim 1, characterized in that the fixing element for the curved slot (222) is an attachment screw.

## Revendications

1. Console (1) constituée de plusieurs parties pour la fixation de goulottes d'installation sur des supports tels que parois ou similaires, comprenant une équerre (2) pouvant coulisser et être bloquée par rapport à l'équerre (4) située du côté goulotte, dont les retours sont pourvus de trous oblongs permettant l'ajustement en hauteur de la console sur la paroi murale d'une part et la fixation de la goulotte d'installation sur la console d'autre part, caractérisée par une partie médiane droite (3) munie de trous oblongs de guidage (33) pour la fixation de la pièce médiane (3) sur la partie (41) de l'équerre côté goulotte (4), où la partie (22) de l'équerre (2) est équipée d'un point de fixation (221) permettant une liaison pivot avec la pièce médiane (3) en dehors des trous oblongs de guidage, et où sur cette même partie (22) à l'opposé de l'axe de rotation (221) est prévue une ouverture arrondie (222) à travers laquelle un élément de fixation peut être raccordé à la partie médiane (3).

2. Console selon les revendications 1, caractérisée en ce que l'élément de raccordement (221) est un rivet.

3. Console selon les revendications 1, caractérisée en ce que l'élément de fixation pour la fente cintrée (222) est une vis de serrage.
